# EUROPÄISCHE PATENTANMELDUNG

(11) **EP 0 527 379 A1**
(43) Veröffentlichungstag der Anmeldung: **17.02.1993**
(21) Anmeldenummer: 92112773.4
(22) Anmeldetag: 27.07.1992
(51) Int. Cl.: G11B 9/00

(54) **Verfahren zur gezielten Modifikation von Festkörperoberflächen im Nanometerbereich durch lokale Delamination sowie Verwendung des Verfahrens zur Speicherung von Informationseinheiten**

(30) Priorität: 10.08.1991 DE 4126497
(71) Anmelder: BASF Aktiengesellschaft, D-67063 Ludwigshafen (DE)
(72) Erfinder: Fuchs, Harald, Dr., W-6719 Carlsberg (DE); Schimmel, Thomas Dr., W-8670 Hof (DE)

(57) **Zusammenfassung**

Die Erfindung betrifft ein Verfahren zu gezielten, ortsselektiven und zeitstabilen Modifikation von Festkörperoberflächen im Nanometerbereich ohne Zerstörung der atomaren Ordnung der Festkörperoberfläche am Ort der Struktur und in deren Umgebung wobei an der Oberfäche von Festkörpern mit Schichtstruktur durch den Einfluß einer lokalen Sonde eine lokale Delamination erzeugt wird sowie die Verwendung dieses Verfahrens zur Speicherung von Informationen.

## Beschreibung

Die Erfindung betrifft ein Verfahren zur gezielten, ortsselektiven und zeitstabilen Modifikation von Festkörperoberflächen im Nanometerbereich ohne Zerstörung der atomaren Ordnung der Festkörperoberfläche am Ort der Struktur und in deren Umgebung sowie seine Verwendung zur Informationsspeicherung.

Die Erzeugung immer kleinerer, reproduzierbar wieder auslesbarer Strukturen ist insbesondere in der Anwendung zur Datenspeicherung von großem Interesse. Die Speicherdichte solcher Medien ist bestimmt durch die kleinste, reproduzierbar schreib- und lesbare Struktur. Dabei sind den erzielbaren Dimensionen der erzeugten Strukturen in zweifacher Hinsicht nach unten Grenzen gesetzt. Zum einen stellt die Positioniergenauigkeit und die Ortsauflösung, z.B. bedingt durch die Geometrie des Schreib-/Lesekopfes, eine Begrenzung fpr die erzielbare Speicherdichte dar. Zum anderen lassen aber auch Materialeigenschaften, wie z.B. Materialinhomogenitäten oder Größe der Weißschen Bezirke, nicht die Erzeugung beliebig kleiner Strukturen zu. Eine prinzipiell untere Grenze für das Schreiben von immer kleineren Informationseinheiten in einen Festkörper stellt der Abstand benachbarter Atome dar. Dieser prinzipiellen Grenze mögichst nahe zu kommen, d.h. die Informationseinheit 1 bit auf einer Dimension von nur wenigen Atomdurchmessern speichern zu können, ist ein für hohe Speicherdichten wünschenswertes Ziel.

Nahfeldmethoden, die auf der Verwendung lokaler Sonden beruhen wie etwa das Rastertunnelmikroskop (RTM) oder das Rasterkraftmikroskop in einer Form als Atomic Force Microscope oder als Magnetic Force Microscope bieten sich für solche Speicherverfahren nicht nur aufgrund ihrer hohen Positioniergenauigkeit von besser als 0,1 nm, sondern vor allem auch wegen ihrer hohen Ortsauflösung an. So war es bereits möglich, bei 4 K und im Ultrahochvakuum mit Xenon-Atomen auf Nickel Buchstaben zu "schreiben", indem Xenon-Atome mit der Spitze eines RTM gezielt positioniert wurden (D.M. Eigler und E.K. Schweitzer, Nature 344 (1990) 524).

Für die technische Anwendung solcher kleinster Strukturen ist aber neben ihren Abmessungen und der Reproduzierbarkeit des Schreibprozesses auch die Möglichkeit des Schreibens und Lesens bei Normalbedingungen, d.h. bei Raumtemperatur und an Luft, wesentlich. Auch sollten sich die erzeugten Strukturen unter diesen Bedingungen als zeitstabil erweisen.

Die Erzeugung solcher bei Raumtemperaturen zeitstabiler Strukturen ist z.B. durch mechanisches Einstechen der Spitze in die Probe möglich (van Loenen et al., Appl. Phys. Lett. 55 (1989) 1312). Dabei wird aber in den meisten Fällen die Probenoberfläche durch Bindungsbruch lokal zerstört. Dies wiederum hat den Nachteil, daß der Prozess nicht mehr reversibel und somit ein nachträgliches Löschen oder Verändern der einmal geschriebenen Informationen nicht mehr möglich ist. Wünschenswert ist vielmehr ein Verfahren, das es erlaubt, auf einer Festkörperoberfläche kleine Deformationen mit Abmessungen im Nanometerbereich zu erzeugen, ohne die atomare Ordnung der Oberfläche zu zerstören, weil solche Modifikationen das Potential einer, z.B. thermischen, Löschbarkeit beinhalten.

Aufgabe der vorliegenden Erfindung war es daher, ein Verfahren bereitzustellen, das die gezielte und reproduzierbare Erzeugung von zeitstabilen Erhöhungen mit Abmessungen im Nanometerbereich auf einer Festkörperoberfläche unter Normalbedingungen, d.h. an Luft und bei Raumtemperatur, erlaubt, ohne daß durch den Modifikationsprozeß lokal am Ort der Modifikation oder in deren unmittelbarer Umgebung die abgebildete atomare Ordnung der Oberfläche, z.B. durch Bindungsbruch, zerstört wird.

Es wurde gefunden, daß sich die geschilderte Aufgabe mit einem Verfahren zur gezielten, ortsselektiven und zeitstabilen Modifikation von Festkörperoberflächen im Nanometerbereich ohne Zerstörung der atomaren Ordnung der Festkörperoberfläche am Ort der Struktur und in deren Umgebung lösen läßt, wenn an der Oberfläche von Festkörpern mit einer Schichtstruktur durch den Einfluß einer lokalen Sonde, die eine räumlich und zeitlich begrenzte anziehende Kraft auf die Festkörperoberfläche ausübt, eine lokale Delamination mindestens einer Schicht der Festkörperoberfläche zu einer zeitstabilen lokalen Erhöhung mit einer lateralen Ausdehnung im Nanometerbereich erzeugt wird.

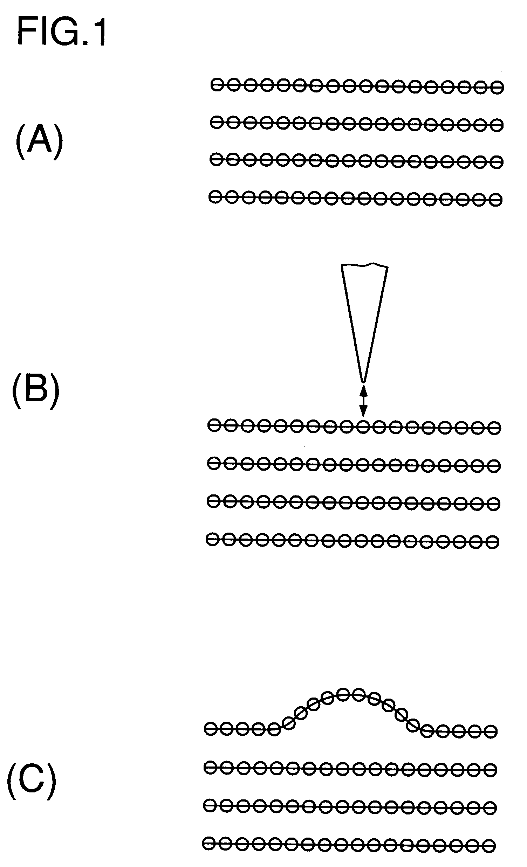

In einer besonderen Ausgestaltung des erfindungsgemäßen Verfahrens wird die lokale Sonde, etwa die Spitze ("Tip") eines Rastertunnelmikroskopes, der Oberfläche eines Schichthalbleiters angenähert und elektrostatisch, magnetisch, durch Adhäsionskräfte oder durch Kapillarkräfte eine anziehende Kraft zwischen Probenoberfläche und Sonde hervorgerufen. Das Verfahren ist schematisch in Figur 1 skizziert. Figur 1A zeigt den Querschnitt durch die Probe eines Schichtmaterials. Die einzelnen Linien stellen die Schichten dar, die atomaren bzw. molekularen Positionen sind als kleine Kreise angedeutet. Figur 1B zeigt eine lokale Sonde, die der Festkörperoberfläche bis auf einen geringen Abstand, vorzugsweise bis auf wenige Atomdurchmesser oder zur Ausnutzung von Adhäsionskräften sogar bis zur Berührung angenähert wird. Der Doppelpfeil deutet die attraktive Wechselwirkung zwischen Sonde und der Festkörperoberfläche an. Wird nun die Sonde während der Einwirkung dieser Kraft etwas von der Probe zurückgezogen, so folgt die Probenoberfläche lokal der Sonde. Während für geringere Kräfte nur eine elastische Deformation der Festkörperoberfläche erhalten wird, kommt es bei ausreichend starker attraktiver Wechselwirkung zwischen Sonde und Oberfläche zu einer Delamination, wie in Figur 1C illustriert. Die oberste Schicht des Materials, bzw. die obersten Schichten werden lokal von den darunterliegenden Schichten abgelöst und stellen somit eine lokale Erhöhung der Probenoberfläche dar. Voraussetzung für dieses Verfahren ist, daß ein Material mit Schichtstruktur, Graphit oder Dichalkogenide, wie z.B. Wolframdiselenid oder Molybdändisulfid, verwendet wird, wobei die für dieses Verfahrn verwendete Festkörperoberfläche parallel zu den Schichtebenen des Materials verlaufen muß. Dabei wird ausgenutzt, daß die Bindung und damit der Zusammenhalt der Atome bzw. Moleküle in der Schicht wesentlich stärker ist als zwischen den einzelnen Schichten. Somit ist es möglich, durch relativ schwache äußere Kräfte verschiedene Schichten lokal voneinander abzulösen, während die Atome oder Moleküle innerhalb der einzelnen Schichten nach wie vor zusammenhalten, ohne daß mikroskopische Defekte, Bindungsbruch, Versetzungen oder Risse innerhalb der einzelnen Schichten entstehen. Auf diese Weise wird erreicht, daß die atomare bzw. molekulare Ordnung innerhalb der Schichten vollständig ehalten bleibt und das Atom- bzw. Molekülgitter an der Oberfläche lokal lediglich leicht verzerrt, nicht aber zerstört wird. Somit ist eine wesentliche Voraussetzung für eine Löschbarkeit dieser durch Delamination erzeugten Strukturen geschaffen.

In einer vorzugsweisen Ausgestaltung wird das erfindungsgemäße Verfahren vorteilhaft mit einem Tunnelmikroskop durchgeführt, dessen Tunnelspitze als lokale Sonde fungiert. Das RTM erlaub es insbesondere, die Oberfläche vor und nach der Modifikation - in den meisten Fällen mit atomarer Auflösung - mit der gleichen Sonde abzubilden, die auch zur Oberflächenmodifikation verwendet wird.

Das erfindungsgemäße Verfahren weist auch den Vorteil auf, daß eine Kühlung nicht erforderlich ist. Die erhaltnen Strukturen waren über die Beobachtungszeit von bis zu zwei Tagen völlig stabil und wurden auch durch häufig wiederholte Abbildungsprozesse mit einem Rastersondenmikroskop nicht verändert. Dagegen lassen sich die erzeugten Strukturen durch eine gezielte und definierte Erwärmung wieder löschen, indem eine thermische aktivierte Relaxation in den unmodifizierten Ausgangszustand erfolgt.

Damit eignet sich das erfindungsgemäße Verfahren in besonders vorteilhafter Weise zur Speicherung und Löschung von Informationseinheiten. Jeder erzeugten Struktur entspräche dabei ein Informationsgehalt von einem bit. Vorteilhaft ist, daß diesselbe Sonde zum Schreiben und zum Lesen der geschriebenen Information sowie zu deren Löschung verwendet werden kann, also einen Schreib-/Lesekopf darstellt, und daß die Geschwindigkeit des Schreibprozesses lediglich durch die Positioniergeschwindigkeit des Piezosystems sowie durch die Zeitkonsante des Tunnelkreises begrenzt ist. Schreibgeschwindigkeiten im Bereich von wenigen Millisekunden für das Schreiben von 1 bit lassen sich mit den üblichen Geräte, solche im Bereich von Mikrosekunden durch geringfügige Modifikation der Elektronik erreichen.

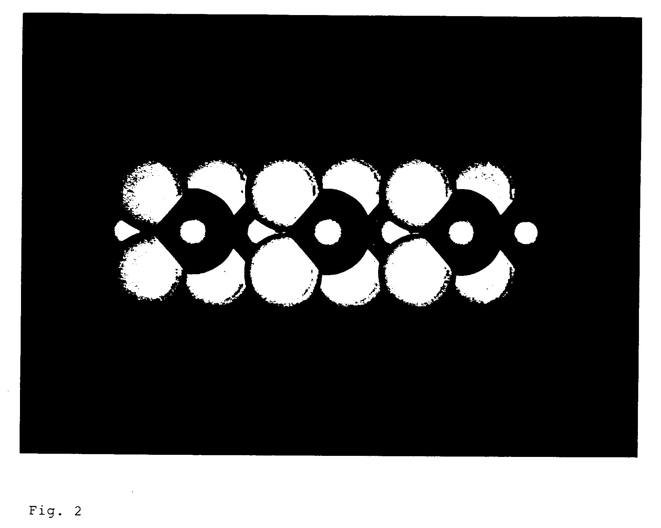

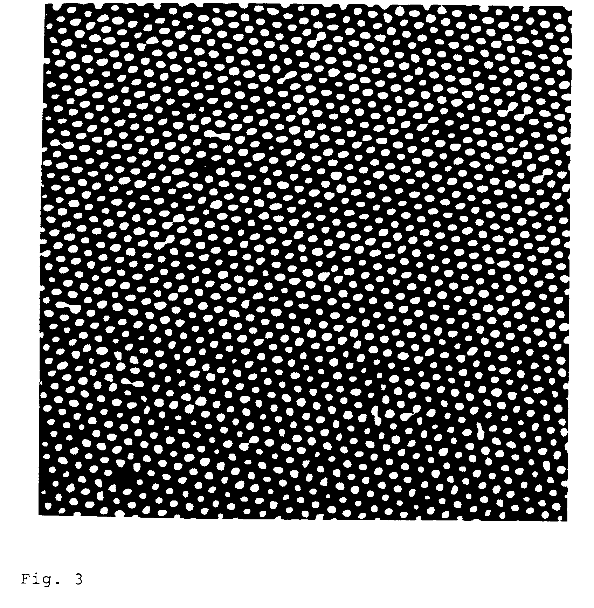

Das erfindungsgemäße Verfahren sei im folgenden beispielhaft erläutert:
Eine nach der Gasphasentransportmethode gezüchtete Woframdiselenidprobe wurde zunächst parallel zu ihrer Spaltrichtung gespalten, so daß eine saubere neue Oberfläche erhalten wurde, die parallel zu den Schichtebenen des Materials verläuft. Jede dieser Schichten besteht aus einer Dreierlage in der Abfolge Selen - Wolfram - Selen, wie in Figur 2 gezeigt. Die grünen Kugeln entsprechen den Positionen der Selen-Atome, die roten denen der Wolfram-Atome. Die so präparierte Oberfläche der Wolframdiselenid-Probe wurde mit einem Rastertunnelmikroskop zunächst mit atomarar Auflösung abgebildet (Figur 3). Die Tunnelspannung gegen Probenoberfläche betrug dabei 0.8 V (Tunnelspitze positiv), der Tunnelstrom betrug 3 nA. der interatomare Abstand in Figur 3 beträgt 0.33 nm.

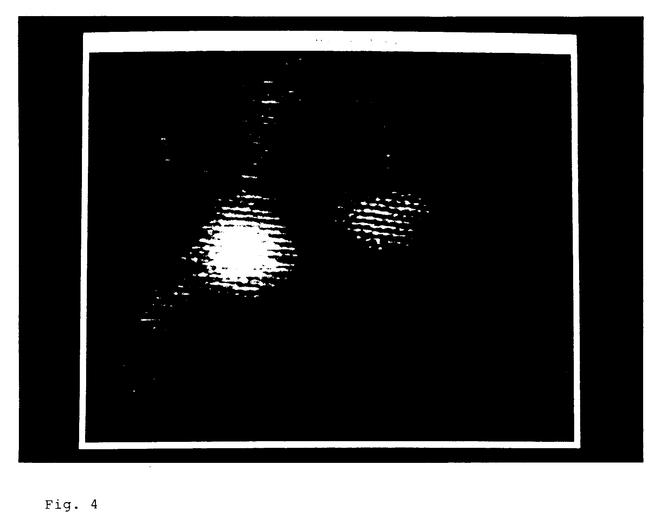

Anschließend wurde die Tunnelspitze auf der Probe an der gewünschten, zu modifizierenden Stelle positioniert und mit den o.a. Tunnelparametern im Tunnelbereich gehalten. Daraufhin wurde zwischen Tunnelspitze und Probe eine Spannung gleicher Polarität wie die Tunnelspannung in Form einer Sinus-Halbwelle mit einer Amplitude von 3.2 Volt und einer Pulsdauer zwischen 2 ms und 20 ms angelegt. Der Regelkreis des Tunnelmikroskopes blieb während des gesamten Prozesses aktiv und veranlaßte aufgrund des durch den Puls bedinten Anstiegs des Tunnelstromes, daß sich die Tunnelspitze bei anliegender Pulsspannung mit der Zeitkonstante des Regelkreises zurückzog. Als Folge der erhöhten attraktiven elektrostatischen Wechselwirkung zwischen Spitze und Probe während des Pulsens kam es dabei jeweils an den Stellen, an denen die Pulse gesetzt wurden, zu einer lokalen Delamination, die sich als glatter, runder Hügel auf der ursprünglich völlig flachen Oberfläche äußerte. Figur 4 zeigt zwei solcher Delaminationshügel mit Durchmessern von etwa 3 nm, die durch zwei Spannungspulse an den entsprechenden Stellen unter gleichzeitigem, Regelkreis-bedingtem Zurückziehen der Spitze von der Probenoberfläche erzeugt wurden. Die Strukturen wurden mit der gleichen Tunnelspitze abgebildet, die auch zu ihrer Erzeugung und zuvor zum Abbilden der unmodifizierten Oberfläche verwendet wurde. Das atomar aufgelöste Bild der Figur 4 zeigt, daß die atomare Ordnung der Oberfläche auch nach der Modifikation im modifizierten Bereich und in dessen Umgebung erhalten bleibt.

Die gezeigten Strukturen wurden bei Raumtemperatur und an Luft erzeugt und erwiesen sich unter diesen Bedingungen über Tage hinweg als zeitstabil. Es konnte auch gezeigt werden, daß das Schreiben der Strukturen auch im Ultrahochvakuum möglich ist und die Strukturen unter diesen Bedingungen ebenso stabil sind.

Für Anwendungen als Informationsspeicher ist es wesentlich, daß der Auslesevorgang die gespeicherten Informationen nicht verändert. Dazu wurden solche Delaminationsstrukturen auf verschiedenen Proben erzeugt und sowohl unmittelbar nach ihrer Erzeugung als uach nach längerer Wartezeit (ca. 20 Stunden) über mehrere Stunden mit dem RTM abgescannt, so daß ein und dieselbe Struktur bis zu 5000 mal abgebildet wurde. In keinem Fall konnten dabei Veränderungen der Strukturen beobachtet werden.

Experimente an mit Delaminationsstrukturen bedeckten Oberflächen zeigten, daß diese auf Wolframdiselenid durch Erhitzen auf 600°C für eine Zeitdauer von ca. 40 Minuten wieder relaxieren und die ursprüngliche flache Probenoberfläche wieder hergestellt werden kann.

## Patentansprüche

1. Verfahren zur gezielten, ortsselektiven und zeitstabilen Modifikation von Festkörperoberflächen im Nanometerbereich ohne Zerstörung der atomaren Ordnung der Festkörperoberfläche am Ort der Struktur und in deren Umgebung, dadurch gekennzeichnet, daß an der Oberfläche von Festkörpern mit einer Schichtstruktur durch den Einfluß einer lokalen Sonde, die eine räumlich und zeitlich begrenzte anziehende Krat auf die Festkörperoberfläche ausübt, eine lokale Delamination mindestens einer Schicht der Festkörperoberfläche zu einer zeitstabilen lokalen Erhöhung mit einer lateralen Ausdehnung im Nanometer-Bereich erzeugt wird.

2. Verfahren gemäß Anspruch 1, dadurch gekennzeichnet, daß als lokale Sonde eine oberflächensensitive Rastersonde eingesetzt wird.

3. Verfahren gemäß Anspruch 1 und 2, dadurch gekennzeichnet, daß die Festkörperoberfläche vor und nach der Modifikation mit der gleichen oberflächensensitiven Rastersonde abgebildet wird, die auch für die Erzeugung der Oberflächenmodifikationen verwendet wurde.

4. Verfahren gemäß Anspruch 1, dadurch gekennzeichnet, daß als Festkörper mit Schichtstruktur Graphit oder Metalldichalkogenide eingesetzt werden.

5. Verfahren gemäß Anspruch 1, dadurch gekennzeichnet, daß als anziehende Kraft eine anziehende elektrostatische Wechselwirkung verwendet wird, die durch Anlegen eines Spannungspulses zwischen lokaler Sonde und Festkörperoberfläche erzeugt wird.

6. Verfahren gemäß Anspruch 1, dadurch gekennzeichnet, daß als anziehende Kraft eine magnetische Wechselwirkung zwischen einer magnetischen lokalen Sonde und der Festkörperoberfläche verwendet wird.

7. Verfahren gemäß Anspruch 1, dadurch gekennzeichnet, daß als anziehende Kraft die bei Berührung von lokaler Sonde und Festkörperoberfläche wirkende Adhäsionskraft zwischen Spitze und Probe herangezogen wird, die beim anschließenden Entfernen der Sonde von der Oberfläche die lokale Delamination erzeugt.

8. Verfahren gemäß Anspruch 1, dadurch gekennzeichnet, daß als anziehende Kraft die bei Berührung von lokaler Sonde und Festkörperoberfläche wirkende van der Waals-Kraft zwischen Spitze und Probe herangezogen wird, die beim anschließenden Entfernen der Sonde von der Oberfläche die lokale Delamination erzeugt.

9. Verfahren gemäß Anspruch 1, dadurch gekennzeichnet, daß sich zwischen lokaler Sonde und Festkörperoberfläche eine Flüssigkeit befindet, welche beim Zurückziehen der Sonde durch Kapillarkräfte die lokale Delamination bewirkt.

10. Verfahren zum Löschen von gemäß Anspruch 1 erzeugten Delaminationsstrukturen durch thermische Behandlung der Festkörperoberfläche.

11. Verwendung des Verfahrens gemäß Anspruch 1 zum Speichern von Informationseinheiten.
